# EUROPEAN PATENT APPLICATION

(11) **EP 4 733 099 A1**
(43) Date of publication of application: **29.04.2026**
(21) Application number: 24864648.1
(22) Date of filing: 11.09.2024
(51) Int. Cl.: B60J 1/20, E06B 9/44

(54) **WINDING SHAFT ASSEMBLY, SUNSHADE CURTAIN ASSEMBLY AND VEHICLE**

(30) Priority: 11.09.2023 CN 202311165283
(71) Applicant: Fuyao Glass Industry Group Co., Ltd., Fuqing, Fujian 350300 (CN)
(72) Inventor: WU, Yue, Fuzhou, Fujian 350300 (CN); YANG, Yang, Fuzhou, Fujian 350300 (CN); HAN, Fucheng, Fuzhou, Fujian 350300 (CN); YU, Jianzhao, Fuzhou, Fujian 350300 (CN); WANG, Zhixin, Fuzhou, Fujian 350300 (CN); CHEN, Jie, Fuzhou, Fujian 350300 (CN)
(74) Representative: Patentanwälte Olbricht Buchhold Keulertz
(86) International application number: PCT/CN2024/118195
(87) International publication number: WO 2025/055932

(57) **Abstract**

A reel assembly, a sunshade assembly, and a vehicle. The reel assembly includes an inner tube (11), a connecting rod (12), two spools (13), a spring fixing seat (141), a spring fixing shaft (142), a spring (14), and two reel supports (15). The present disclosure has the following advantages: the present disclosure avoids the eccentric wear of the pull cord caused by an axial movement of the inner tube (11) and the spools (13) during rotation, improves the positional accuracy of the spools (13), reduces the dimensional machining precision requirement of the inner tube (11), and prolongs the service life of the sunshade assembly (20); the sunshade fabric (25) wound on the reel assembly (10) is tensioned to prevent the sunshade fabric (25) from sagging toward the middle and avoid wrinkles; a single spring (14) is used to apply winding forces to the two spools (13) simultaneously, and the two spools (13) are rigidly connected to the connecting rod (12) in a rotational direction of the connecting rod (12), thereby ensuring the movement consistency of the sunshade fabric (25); the pull cord (27) is prevented from detaching from the spool (13), and the sliding portion (242) of the slider (24) is connected to an edge strip (251), thereby enhancing the fixing effect on the edge strip (251) and facilitating guiding the edge strip (251) into the guide rail (22).

## Description

### RELATED APPLICATION

The present disclosure claims priority to Chinese Patent Application No. 202311165283.0 filed on September 11, 2023, which is hereby incorporated by reference in its entirety.

### TECHNICAL FIELD

The present disclosure relates to the technical field of vehicles, and particularly to a reel assembly, sunshade assembly and a vehicle.

### BACKGROUND

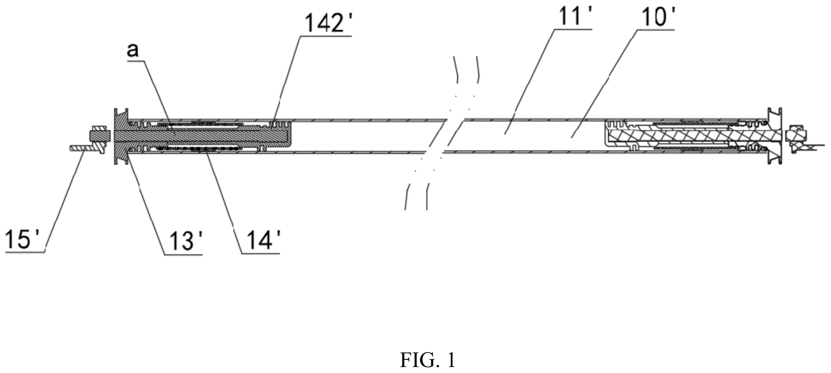

In existing automobile sunshades, in order to freely control the shading area and meet user needs, many sunshades with an on-demand stop function have generally been developed. A reel assembly of the existing sunshades usually includes two springs (as illustrated in FIG. 1). When the sunshade is manually opened, a pull cord wound around a spool is released, a sunshade fabric at a pull rod is retracted, edge strips are retracted, and an inner tube follows suit. The spool at an end of the reel rotates in the same direction as the inner tube with the same rotation length, and the spring inside the reel has no relative displacement relative to the inner tube and the spool, thereby maintaining a force balance at all times. When the applied force is stopped, the sunshade remains stationary. When the sunshade is closed, the spool winds up the pull cord in the opposite direction with the same force, thereby realizing the the on-demand stop function.

The reel assembly in FIG. 1 uses two springs to apply winding forces to the spool respectively. Due to machining and assembling errors of the two springs, the winding forces of the two springs are prone to inconsistency, which may cause jamming in the process of pulling the sunshade fabric by the pull rod. Since two ends of the reel assembly are equipped with two sets of independent winding mechanisms, when a pulling position deviates from the center of the pull rod, the two sets of winding mechanisms bear different forces, which leads to inconsistent movements of the two ends of the sunshade fabric, thereby resulting in jamming and tilting of the sunshade.

Patent document CN208812942U discloses a sunshade, which uses a single spring to solve the above problems. However, in this patent document, two ends of the spring are connected to a fixed block and a cord spool, respectively. In the reel assembly illustrated in FIG. 1, one end of the spring is also directly connected to the spool. Since being in a stretched state, the spring generates an axial tension that pulls the spool toward the reel. The position of the spool is affected by the length of the reel. If the reel is too short, the spool will undergo axial movement when the reel and the spool rotates, which is prone to causing eccentric wear of the pull cord and reducing the service life of the sunshade.

### SUMMARY

The present disclosure aims to provide a reel assembly, a sunshade assembly and a vehicle for solving the problems proposed in the background section.

In order to achieve the above technical objective, the present disclosure adopts the following technical solutions.

The present disclosure provides a reel assembly, which includes an inner tube, a connecting rod, two spools, a spring fixing seat, a spring fixing shaft, a spring, and two reel supports.

The connecting rod is rotatably mounted in and extending through the inner tube.

The two spools are respectively disposed at two ends of the connecting rod and located outside the inner tube. The two spools are fixedly connected to the connecting rod in a rotational direction of the connecting rod, and movably connected to the connecting rod in an axial direction of the connecting rod.

The spring fixing seat is disposed between the inner tube and the connecting rod and fixed at one end of the inner tube. The spring fixing seat is movably connected to the connecting rod in the axial direction of the connecting rod.

The spring fixing shaft is fixed to the connecting rod and located inside the inner tube.

The spring is wound around the connecting rod, with one end of the spring fixed to the spring fixing seat and the other end thereof fixed to the spring fixing shaft.

The two reel supports are respectively disposed at two ends of the connecting rod and located outside the spools. Under an axial tension of the spring, the two spools are pushed outward to the two reel supports in the axial direction of the connecting rod.

Further, the inner tube, the connecting rod, the spool, and the spring are coaxially arranged.

Further, the reel assembly further includes a fixed bushing, which is disposed between the inner tube and the connecting rod and fixed to the other end of the inner tube. The connecting rod is rotatably mounted in the fixed bushing.

In an of the embodiments, an inner sleeve is disposed between the connecting rod and the spring.

In an of the embodiments, an outer sleeve is disposed between the spring and the inner tube.

In an of the embodiments, the spool is cylindrical or conical.

In an of the embodiments, the spring is a coil spring or a torsion spring.

The present disclosure further provides a sunshade assembly, which includes a glass pane, the aforementioned reel assembly, two guide rails, a pull rod, a sunshade fabric, two pulleys, two pull cords, and a driving mechanism.

The reel assembly is fixed to the glass pane.

The two guide rails are disposed in parallel on two sides of the glass pane, respectively, with one end of each of the guide rails aligned with the corresponding spool.

The pull rod is disposed opposite to and spaced apart from the reel assembly, with two ends of the pull rod provided with sliders respectively. Each of the sliders includes a mounting portion and a sliding portion connected to each other. The mounting portion is fixed to the pull rod, and the sliding portion is slidably mounted in the corresponding guide rail.

The sunshade fabric has one end wound around the inner tube and the other end connected to the pull rod. Two side edges of the sunshade fabric are disposed in the corresponding guide rails respectively;
Each of the two pulleys is disposed at the other end of the corresponding guide rail.

Each of the two pull cords has one end wound around the corresponding spool, and the other end fixed to the corresponding sliding portion after being redirected by the corresponding pulley.

The driving mechanism is disposed on the pull rod or the reel assembly.

In an embodiment, the driving mechanism is a manual driving mechanism or a motor driving mechanism.

Further, the manual driving mechanism is a handle disposed on the pull rod.

In an embodiment, the pull cord includes an end fitting fixed to the spool, the spool has a first side and a second side opposite to each other, the first side of the spool is provided with a clamping groove matching the shape of the end fitting, and the end fitting is fixed in the clamping groove. The spool is further provided with a cord groove for accommodating the pull cord, and the pull cord is wound around the cord groove from the second side of the spool.

In an embodiment, each of the side edges of the sunshade fabric is provided with an edge strip which is fixed to the sliding portion, and both the edge strip and the sliding portion are in sliding fit with the guide rail.

Optionally, the edge strip is made of plastic.

The present disclosure further provides a vehicle, which includes the aforementioned sunshade assembly.

Compared with the prior art, the present disclosure achieves the following advantageous effects:
(1) The axial tension generated by the spring in a stretched state pushes the two spools outward to the two reel supports respectively through the connecting rod and the spring fixing seat in the axial direction, which avoids the eccentric wear of the pull cord caused by axial movement of the inner tube and the spools during rotation, improves the positional accuracy of the spools, reduces the dimensional machining precision requirement of the inner tube, and prolongs the service life of the sunshade assembly.
(2) The winding force generated by the pre-twisted spring can tension the sunshade fabric wound on the reel assembly, thereby ensuring that the sunshade fabric remains in a taut state during opening or closing, preventing the sunshade fabric from sagging toward the middle and avoiding the formation of wrinkles.
(3) A single spring is used to apply winding forces to the two spools simultaneously, and the two spools are rigidly connected to the connecting rod in the rotational direction of the connecting rod, thereby ensuring the movement consistency of the sunshade fabric. Therefore, the two sides of the sunshade fabric perform synchronous movement, regardless of which side of the sunshade fabric is pulled by the pull rod, thereby solving the problem that the uneven force on the pull rod causes inconsistent movement of the two sides of the sunshade fabric and tilting of the pull rod, resulting in the sunshade fabric getting stuck in the guide rail and being unable to continue operation.
(4) The present disclosure prevents the pull cord from detaching from the spool, and the connection between the sliding portion of the slider and the edge strip enhances the fixing effect on the edge strip and facilitates guiding the edge strip into the guide rail.

### BRIEF DESCRIPTION OF THE DRAWINGS

FIG. 1 illustrates a structural diagram of a reel assembly in the prior art;
FIG. 2 illustrates a structural diagram of a reel assembly according to an embodiment of the present disclosure;
FIG. 3 illustrates a partially enlarged view at A in FIG. 2;
FIG. 4 illustrates a structural diagram of a sunshade assembly according to an embodiment of the present disclosure;
FIG. 5 illustrates an enlarged view of a slider according to an embodiment of the present disclosure;
FIG. 6 illustrates an enlarged view of a connection between a pull cord and a spool according to an embodiment of the present disclosure;
FIG. 7 illustrates an enlarged view of a connection between a pull cord and a cylindrical spool according to an embodiment of the present disclosure;
FIG. 8 illustrates an enlarged view of a connection between a pull cord and a conical spool according to an embodiment of the present disclosure;
FIG. 9 illustrates a cross-sectional view taken along line B-B in FIG. 4; and
FIG. 10 illustrates an enlarged view of a connection between a sliding portion and an edge strip according to an embodiment of the present disclosure.

Reference signs:
10: reel assembly; 11: inner tube; 12: connecting rod; 13: spool;
131: first side; 132: second side; 133: clamping groove; 134: cord groove; 14: spring;
141: spring fixing seat; 142: spring fixing shaft; 15: reel support; 16: fixed bushing;
17: inner sleeve; 18: outer sleeve;
20: sunshade assembly; 21: glass pane; 22: guide rail; 23: pull rod; 24: slider;
241: mounting portion; 242: sliding portion; 25: sunshade fabric; 251: edge strip;
26: pulley; 27: pull cord; 271: end fitting; 28: driving mechanism; 281: handle;
a: fixing shaft.

### DETAILED DESCRIPTION OF THE EMBODIMENTS

For a clearer understanding of the objectives, features, and effects of the present disclosure, specific embodiments of the present disclosure will now be described in detail below with reference to the drawings. In the following description, many specific details are set forth to facilitate a full understanding of the present disclosure. However, the present disclosure can be implemented in many other ways different from those described here, and those skilled in the art can make similar improvements without departing from the connotation of the present disclosure. Therefore, the present disclosure is not limited to the specific embodiments disclosed below.

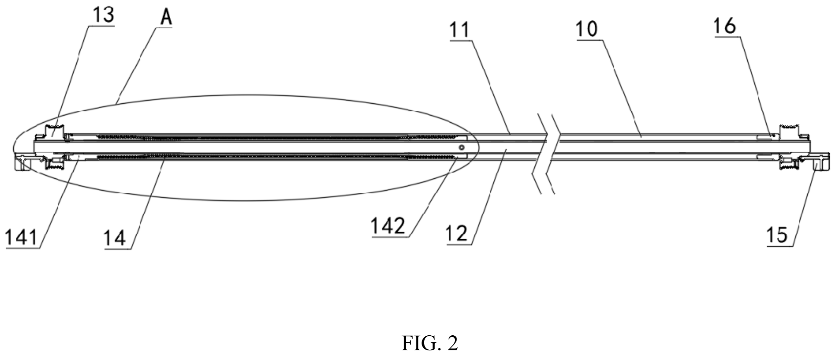

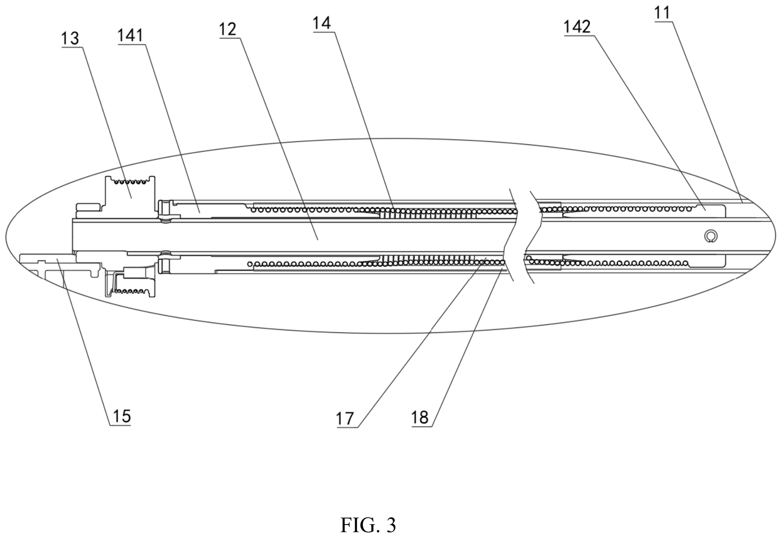

As illustrated in FIGS. 2 and 3, some embodiments of the present disclosure provide a reel assembly 10, which includes an inner tube 11, a connecting rod 12, two spools 13, a spring fixing seat 141, a spring fixing shaft 142, a spring 14, and two reel supports 15.

The connecting rod 12 is rotatably mounted in and extending through the inner tube 11.

The two spools 13 are respectively disposed at two ends of the connecting rod 12 and located outside the inner tube 11. The two spools 13 are fixedly connected to the connecting rod 12 in a rotational direction of the connecting rod 12, and movably connected to the connecting rod 12 in an axial direction of the connecting rod 12.

The spring fixing seat 141 is disposed between the inner tube 11 and the connecting rod 12 and fixed to an end of the inner tube 11. The spring fixing seat 141 is movably connected to the connecting rod 12 in the axial direction of the connecting rod 12.

The spring fixing shaft 142 is fixed to the connecting rod 12 and located inside the inner tube 11.

The spring 14 is wound around the connecting rod 12, with one end of the spring 14 fixed to the spring fixing seat 141 and the other end thereof fixed to the spring fixing shaft 142.

The two reel supports 15 are respectively disposed at two ends of the connecting rod 12 and located outside the spools 13. Under an axial tension of the spring 14, the two spools 13 are pushed outward to the two reel supports 15 in the axial direction of the connecting rod 12.

During mounting, the spring 14 is wound around the connecting rod 12, with one end of the spring 14 fixed to the spring fixing seat 141 and the other end thereof fixed to the spring fixing shaft 142; the connecting rod 12, together with the spring 14, passes through the inner tube 11, and the spring fixing seat 141 is fixed at one end of the inner tube 11; the connecting rod 12 is pushed so that the other end of the connecting rod 12 passes through the other end of the inner tube 11, making the spring 14 in a stretched state to generate an axial tension; since the two spools 13 are movably connected to the connecting rod 12 in the axial direction of the connecting rod 12, and the spring fixing seat 141 is also movably connected to the connecting rod 12 in the axial direction of the connecting rod 12, the axial tension pushes the spools 13 disposed on the two sides of the connecting rod 12 outward to the reel supports 15 through the connecting rod 12 and the spring fixing seat 141 respectively. This avoids the eccentric wear of the pull cord 27 caused by axial movement of the inner tube 11 and the spools 13 during rotation, improves the positional accuracy of the spools 13, reduces the dimensional machining precision requirement of the inner tube 11, and prolongs the service life of the sunshade assembly 20.

In this embodiment, the spring 14 is a coil spring or a torsion spring. The spring 14 is pre-twisted before being mounted into the reel assembly 10. The winding force generated by the pre-twisted spring 14 can tension the sunshade fabric 25 wound on the reel assembly 10, thereby ensuring that the sunshade fabric 25 remains in a taut state during opening or closing, preventing the sunshade fabric 25 from sagging toward the middle and avoiding wrinkles.

A single spring 14 is used to apply winding forces to both spools 13. Since the two spools 13 are fixedly connected to the connecting rod 12 in the rotational direction of the connecting rod 12, and the winding forces are provided solely by the single spring 14, the winding forces on the two spools 13 are always identical, thereby solving the problem in the prior art that the reel assembly using two springs (as illustrated in FIG. 1) may have inconsistent elastic coefficients, which would otherwise lead to inconsistent winding forces on the two spools.

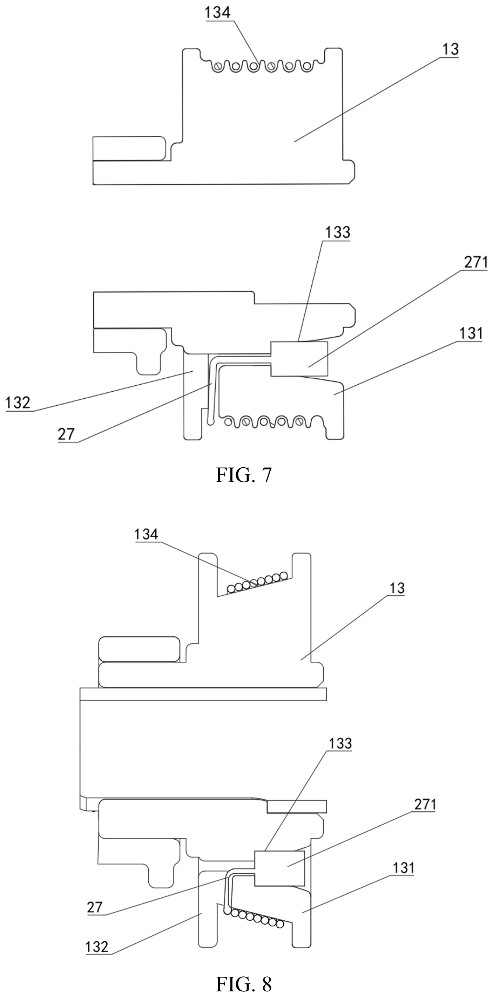

In this embodiment, optionally, as illustrated in FIG. 7, the spool 13 is cylindrical. Alternatively, as illustrated in FIG. 8, the spool 13 is conical.

In this embodiment, further, the inner tube 11, the connecting rod 12, the spool 13, and the spring 14 are coaxially arranged to ensure the operational stability of the reel assembly 10 and prevent noise generation.

In this embodiment, further, as illustrated in FIG. 2, the reel assembly 10 further includes a fixed bushing 16, which is disposed between the inner tube 11 and the connecting rod 12 and fixed to the other end of the inner tube 11. The connecting rod 12 is rotatably mounted in the fixed bushing 16. The fixed bushing 16 can prevent the displacement of the connecting rod 12 in the inner tube 11, which would otherwise cause axial deviation of the two spools 13 and result in jamming when pulling the sunshade fabric 25.

In an embodiment, as illustrated in FIG. 3, an inner sleeve 17 is disposed between the connecting rod 12 and the spring 14. The inner sleeve 17 can prevent abnormal noise caused by friction between the spring 14 and the connecting rod 12.

In an embodiment, as illustrated in FIG. 3, an outer sleeve 18 is disposed between the spring 14 and the inner tube 11. The outer sleeve 18 can prevent abnormal noise caused by friction between the spring 14 and the inner tube 11.

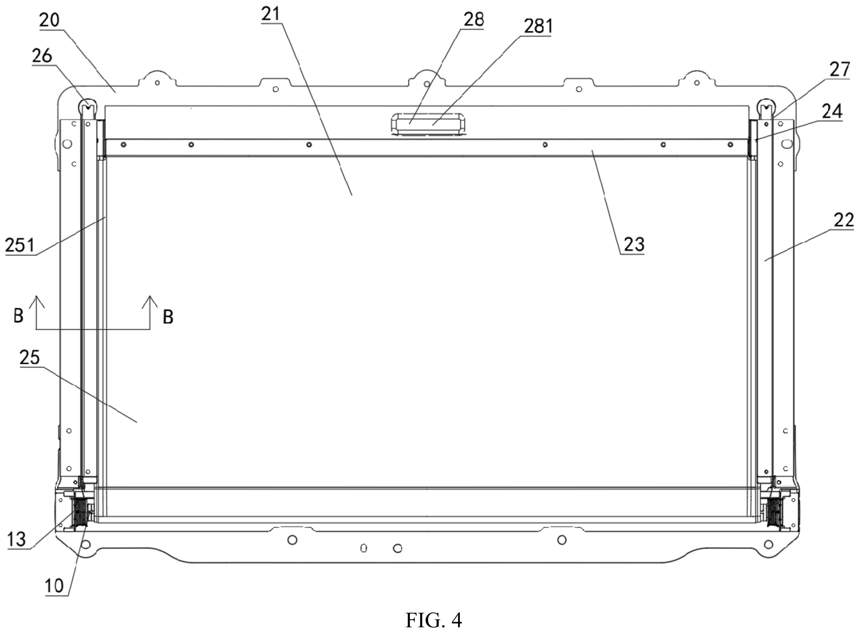

As illustrated in FIG. 4, the present disclosure further provides a sunshade assembly 20, which includes a glass pane 21, the reel assembly 10 as described above, two guide rails 22, a pull rod 23, a sunshade fabric 25, two pulleys 26, two pull cords 27, and a driving mechanism 28.

The reel assembly 10 is fixed to the glass pane21.

The two guide rails 22 are disposed in parallel on two sides of the glass pane 21, respectively, with one end of each of the guide rails 22 aligned with the spool 13 on the corresponding side.

The pull rod 23 is disposed opposite to and spaced apart from the reel assembly 10, with two ends of the pull rod 23 provided with sliders 24 respectively. Each of the sliders 24 includes a mounting portion 241 and a sliding portion 242 connected to each other. The mounting portion 241 is fixed to the pull rod 23. The sliding portion 242 is slidably mounted in the guide rail 22 on the corresponding side.

The sunshade fabric 25 has one end wound around the inner tube 11 and the other end connected to the pull rod 23. Two side edges of the sunshade fabric 25 are disposed in the guide rails 22 on corresponding sides respectively.

Each of the two pulleys 26 is disposed at the other end of the guide rail 22 on the corresponding side.

Each of the two pull cords 27 has one end wound around the spool 13 on the corresponding side, and the other end fixed to the sliding portion 242 on the corresponding side after being redirected by the pulley 26 on the corresponding side.

The driving mechanism 28 is disposed on the pull rod 23 or the reel assembly 10.

The spring 14 is pre-twisted before being mounted into the reel assembly 10, and the winding force generated by the pre-twisted spring 14 acts on the sunshade fabric 25. The slider 24 and the reel assembly 10 change the direction of the force through the pull cord 27, the spool 13, and the pulley, so that the winding force on the sunshade fabric 25 achieve a force balance on the slider 24, enabling the sunshade fabric 25 to stop and hold at any position, thereby realizing the on-demand stop function of the sunshade assembly. In addition, the winding force generated by the pre-twisted spring 14 can tension the sunshade fabric 25 wound around the reel assembly 10, thereby ensuring that the sunshade fabric 25 remains in a taut state during opening or closing, preventing the sunshade fabric 25 from sagging toward the middle and avoiding wrinkles.

A single spring 14 is used to apply winding forces to both spools 13. Since the two spools 13 are fixedly connected to the connecting rod 12 in the rotational direction of the connecting rod 12, and the winding forces are provided solely by the single spring 14, the winding forces on the two spools 13 are always identical. When the driving mechanism 28 drives the pull rod 23 to pull one side of the sunshade fabric 25, the slider 24 on the one side pulls the pull cord 27on the one side; the pull cord 27 on the one side then pulls the cord wheel 13 on the one side via the pulley 26 on the one side, causing the spool 13 on the one side to rotate. Simultaneously, the spool 13 on the other side rotates accordingly, which drives the pull cord 27 on the other side, and the pull cord 27 on the other side is connected to the slider 24 on the other side, which is connected to the pull rod 23, so that the pull rod 23 pulls the other side of the sunshade fabric 25. Thus, the two sides of the sunshade fabric 25 move in the same direction simultaneously, thereby ensuring the movement consistency of the sunshade fabric 25. Therefore, the two sides of the sunshade fabric 25 perform synchronous movement, regardless of which side of the sunshade fabric 25 is pulled by the pull rod 23, thereby solving the problem where, when the pull rod is subjected to uneven force, the two sides of the sunshade fabric move inconsistently, causing the pull rod to tilt and the sunshade fabric to jam in the guide rails and cannot continue to operation.

In this embodiment, the material of the glass pane 21 is not limited, and is usually inorganic glass, organic glass, or a composite material. The material of the guide rails 22 is not limited, and is usually plastic or metal.

In this embodiment, optionally, the driving mechanism 28 is a manual driving mechanism or a motor driving mechanism, so that the sunshade fabric 25 can be opened and closed either manually or automatically.

Further, as illustrated in FIG. 4, the manual driving mechanism 28 is a handle 281 disposed on the pull rod 23.

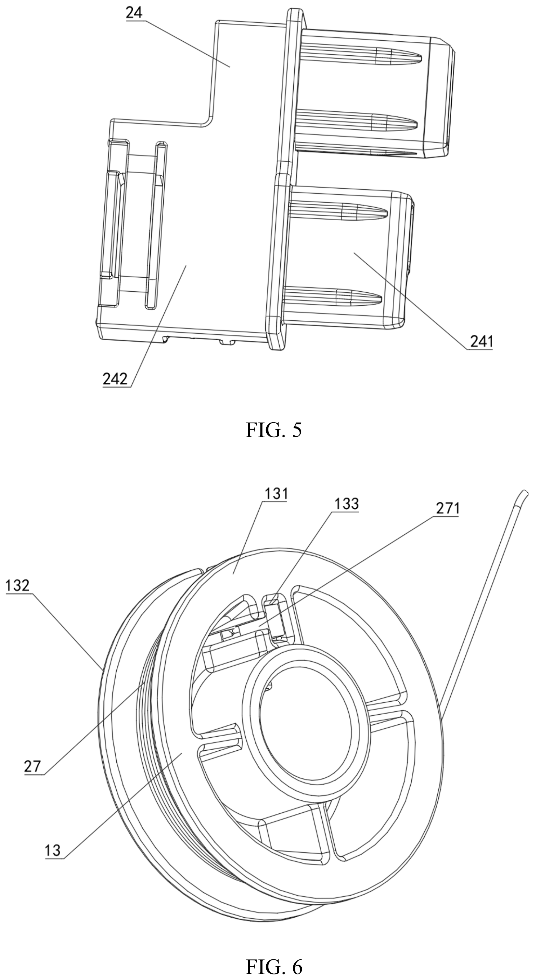

In an embodiment, as illustrated in FIGS. 6 to 8, the pull cord 27 includes an end fitting 271 fixed to the spool 13. The spool 13 has a first side 131 and a second side 132 opposite to each other. The first side 131 of the spool 13 is provided with a clamping groove 133 matching the shape of the end fitting 271, and the end fitting 271 is fixed in the clamping groove 133. The spool 13 is further provided with a cord groove 134 for accommodating the pull cord 27, and the pull cord 27 is wound around the cord groove 134 from the second side 132 of the spool 13.

The end fitting 271 is disposed in the clamping groove 133 on the first side 131 of the spool 13, and the pull cord 27 is wound around the cord groove 134 from the second side 132 of the spool 13. The position of the end fitting 271 and a position where the pull cord 27 starts to be wound around the cord groove 134 of the spool 13 are on different sides. Compared with the case where the above two positions are on the same side, the present disclosure enhances the fixing effect between the spool 13 and the pull cord 27, and solves the problem that the end fitting of the pull cord connected to the spool is prone to detaching from the spool, which would otherwise lead to winding failure of the pull cord.

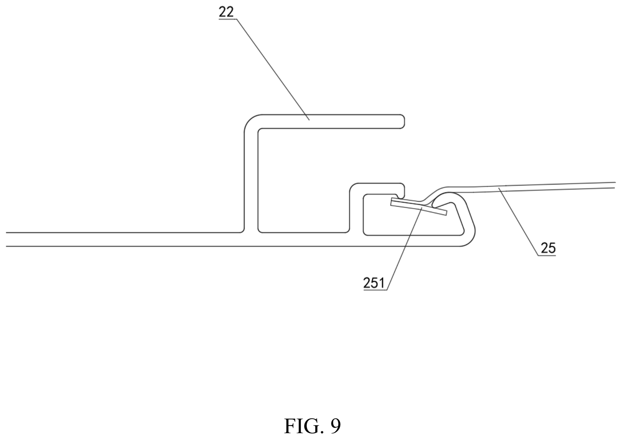

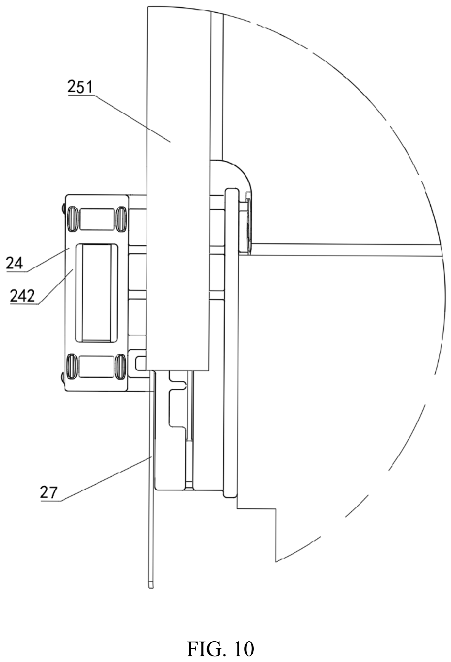

In an embodiment, as illustrated in FIGS. 9 and 10, each of the side edges of the sunshade fabric 25 is provided with an edge strip 251 which is fixed to the sliding portion 242, and both the edge strip 251 and the sliding portion 242 are in sliding fit with the guide rail 22.

In this embodiment, the fixing mode between the edge strip 251 and the sliding portion 242 is not limited. The edge strip 251 may be fixed to the sliding portion 242 by means of bonding or the like. The connection between the sliding portion 242 and the edge strip 251 enhances the fixing effect on the edge strip 251 and facilitates the guidance of the edge strip 251 into the guide rail 22.

In this embodiment, the edge strip 251 may be made of a plastic material such as TPV ((Thermoplastic Vulcanizate)), TPE (Thermoplastic Elastomer), or TPEE (Thermoplastic Polyester Ether), or alternatively of a steel edge strip or a PDF (Prevent Derailed Function) edge strip. Optionally, the edge strip 251 is made of plastic. The plastic edge strip has the advantages such as low friction coefficient, easy retraction and bending, and good flexibility, which can reduce movement resistance of the sunshade fabric 25 during operation and improve the operational stability of the sunshade fabric 25 in the sunshade assembly 20.

The present disclosure further provides a vehicle, which includes the sunshade assembly 20 described above.

In the aforementioned vehicle, by adopting the sunshade assembly 20 described above, the axial tension generated by the spring 14 in a stretched state pushes the two spools 13 outward to the two reel supports 15 respectively through the connecting rod 12 and the spring fixing seat 141 in the axial direction, which avoids the eccentric wear of the pull cord 27 caused by axial movement of the inner tube 11 and the spools 13 during rotation, improves the positional accuracy of the spools 13, reduces the dimensional machining precision requirement of the inner tube 11, and prolongs the service life of the sunshade assembly 20. Secondly, the winding force generated by the pre-twisted spring 14 can tension the sunshade fabric 25 wound on the reel assembly 10, thereby ensuring that the sunshade fabric 25 remains in a taut state during opening or closing, preventing the sunshade fabric 25 from sagging toward the middle and avoiding wrinkles. Thirdly, a single spring 14 is used to apply winding forces to the two spools 13 simultaneously, and the two spools 13 are rigidly connected to the connecting rod 12 in the rotational direction of the connecting rod 12, thereby ensuring the movement consistency of the sunshade fabric 25. Therefore, the two sides of the sunshade fabric 25 perform synchronous movement, regardless of which side of the sunshade fabric 25 is pulled by the pull rod 23, thereby solving the problem where, when the pull rod is subjected to uneven force, the two sides of the sunshade fabric move inconsistently, causing the pull rod to tilt and the sunshade fabric to jam in the guide rail and cannot continue to operation. Finally, the present disclosure prevents the pull cord from detaching from the spool, and the connection between the sliding portion 242 of the slider 24 and the edge strip 251 enhances the fixing effect on the edge strip 251 and facilitates guiding the edge strip 251 into the guide rail 22.

It should be noted that in the present disclosure, if the glass pane 21 is inorganic glass, examples may include soda-lime glass (also known as soda-lime silicate glass), aluminosilicate glass, borate glass, borosilicate glass, lithium aluminosilicate glass, alkali-free glass, quartz glass, etc. Among these, the soda-lime glass is particularly preferred. From the perspective of improving the strength, the inorganic glass may also be tempered glass, which may be either chemically tempered glass or physically tempered glass.

If the glass pane 21 is organic glass (resin), examples may include polycarbonate resin, polystyrene resin, aromatic polyester resin, acrylic resin, polyester resin, polyarylate resin, condensates of halogenated bisphenol A and ethylene glycol, acrylic urethane resin, acrylic resin containing halogenated aryl groups, etc. Among these, polycarbonate resin such as aromatic polycarbonate resin and acrylic resin such as polymethyl methacrylate-based acrylic resin are preferred; polycarbonate resin is more preferred; and bisphenol A-based polycarbonate resin is particularly preferred. In addition, two or more of the above resins may be used in combination.

The technical features of the above embodiments may be combined arbitrarily. For the conciseness of description, not all possible combinations of the various technical features in the above embodiments have been described. However, as long as there is no contradiction in the combinations of these technical features, all such combinations shall be deemed to fall within the scope of the present disclosure.

The embodiments described above merely represent several implementations of the present disclosure, and shall not be construed as limitations to the scope of the invention patent although the descriptions thereof are specific and detailed. It shall be noted that for those of ordinary skill in the art, several modifications and improvements can be made without departing from the concept of the present disclosure, and those modifications and improvements shall fall within the protection scope of the present disclosure. Therefore, the patent protection scope of the present disclosure shall be subject to the appended claims.

In addition, the terms "first" and "second" are used merely for descriptive purposes, and shall not be construed as indicating or implying relative importance, or as implicitly specifying the quantity of the technical features indicated. Therefore, a feature defined with "first" or "second" may explicitly or implicitly include at least one such feature. In the description of the present disclosure, the meaning of "a plurality of" is at least two, such as two, three, etc., unless otherwise explicitly and specifically defined.

In the present disclosure, unless otherwise explicitly specified and defined, terms such as "mount", "connect" and "fix" shall be understood in a broad sense, e.g., it may indicate a fixed connection, a detachable connection (e.g., using bolts or screws), an integrated connection (e.g., riveting, welding), a mechanical connection, an electrical connection, a direct connection, an indirect connection through an intermediate medium, an internal communication between two elements or an interaction relationship between two elements, unless otherwise explicitly defined. For those of ordinary skill in the art, the specific meanings of the above terms in the present disclosure can be understood according to specific circumstances.

In addition, in any technical solution disclosed in the present disclosure, unless otherwise stated, the terms used to indicate a positional relationship or a shape shall include states or shapes that are approximate, similar, or close thereto.

Any component provided in the present disclosure may either be assembled from a plurality of separate constituent parts or be a single component manufactured through an integral forming process.

In the present disclosure, unless otherwise explicitly specified and defined, a first feature being "on" or "under" a second feature may mean that the first and second features are in direct contact with each other, or that the first and second features are in indirect contact with each other through an intermediate medium. The terms "vertical", "horizontal", "upper", "lower", "left", "right" and similar expressions used herein are for illustrative purposes only, and do not represent the only implementation.

## Claims

1. A reel assembly, comprising:
an inner tube;
a connecting rod rotatably mounted in and extending through the inner tube;
two spools respectively disposed at two ends of the connecting rod and located outside the inner tube, wherein the two spools are fixedly connected to the connecting rod in a rotational direction of the connecting rod, and movably connected to the connecting rod in an axial direction of the connecting rod;
a spring fixing seat disposed between the inner tube and the connecting rod and fixed to an end of the inner tube, wherein the spring fixing seat is movably connected to the connecting rod in the axial direction of the connecting rod;
a spring fixing shaft fixed to the connecting rod and located inside the inner tube;
a spring wound around the connecting rod, with one end of the spring fixed to the spring fixing seat and the other end thereof fixed to the spring fixing shaft; and
two reel supports respectively disposed at two ends of the connecting rod and located outside the spools, wherein under an axial tension of the spring, the two spools are pushed outward to the two reel supports in the axial direction of the connecting rod.

2. The reel assembly according to claim 1, wherein the inner tube, the connecting rod, the spool, and the spring are coaxially arranged.

3. The reel assembly according to claim 1, further comprising a fixed bushing, which is disposed between the inner tube and the connecting rod and fixed to the other end of the inner tube; and
the connecting rod is rotatably mounted in the fixed bushing.

4. The reel assembly according to claim 1, wherein an inner sleeve is disposed between the connecting rod and the spring.

5. The reel assembly according to claim 1, wherein an outer sleeve is disposed between the spring and the inner tube.

6. The reel assembly according to claim 1, wherein the spool is cylindrical or conical.

7. The reel assembly according to claim 1, wherein the spring is a coil spring or a torsion spring.

8. A sunshade assembly, comprising:
a glass pane;
the reel assembly according to any one of claims 1 to 7, which is fixed to the glass pane;
two guide rails disposed in parallel on two sides of the glass pane, respectively, with one end of each of the guide rails aligned with the corresponding spool;
a pull rod disposed opposite to and spaced apart from the reel assembly, with two ends of the pull rod provided with sliders respectively, wherein each of the sliders comprises a mounting portion and a sliding portion connected to each other, the mounting portion is fixed to the pull rod, and the sliding portion is slidably mounted in the corresponding guide rail;
a sunshade fabric, with one end wound around the inner tube and the other end connected to the pull rod, wherein two side edges of the sunshade fabric are disposed in the corresponding guide rails respectively;
two pulleys each disposed at the other end of the corresponding guide rail;
two pull cords, each having one end wound around the corresponding spool, and the other end fixed to the corresponding sliding portion after being redirected by the corresponding pulley; and
a driving mechanism disposed on the pull rod or the reel assembly.

9. The sunshade assembly according to claim 8, wherein the driving mechanism is a manual driving mechanism or a motor driving mechanism.

10. The sunshade assembly according to claim 9, wherein the manual driving mechanism is a handle disposed on the pull rod.

11. The sunshade assembly according to claim 8, wherein the pull cord comprises an end fitting fixed to the spool, the spool has a first side and a second side opposite to each other, the first side of the spool is provided with a clamping groove matching the shape of the end fitting, and the end fitting is fixed in the clamping groove;
the spool is further provided with a cord groove for accommodating the pull cord, and the pull cord is wound around the cord groove from the second side of the spool.

12. The sunshade assembly according to claim 8, wherein each of the side edges of the sunshade fabric is provided with an edge strip which is fixed to the sliding portion, and both the edge strip and the sliding portion are in sliding fit with the guide rail.

13. The sunshade assembly according to claim 12, wherein the edge strip is made of plastic.

14. A vehicle, comprising the sunshade assembly according to according to any one of claims 8 to 13.
